(19)

Europäisches
Patentamt
European
Patent Office
Office européen
des brevets

(11) **EP 3 171 600 A1**

(12) **EUROPEAN PATENT APPLICATION**

(43) Date of publication:
**24.05.2017 Bulletin 2017/21**

(51) Int Cl.:
*H04N 21/218* (2011.01)     *H04N 21/431* (2011.01)

(21) Application number: **16197871.3**

(22) Date of filing: **09.11.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **19.11.2015 EP 15306839**

(71) Applicant: **Thomson Licensing
92130 Issy-les-Moulineaux (FR)**

(72) Inventors:
• **HELLIER, Pierre**
**35576 Cesson-Sévigné Cedex (FR)**
• **ALLIE, Valérie**
**35576 Cesson-Sévigné Cedex (FR)**
• **BRAGA, Artur**
**35708 Rennes Cedex 7 (FR)**

(74) Representative: **Huchet, Anne
TECHNICOLOR
1-5, rue Jeanne d'Arc
92130 Issy-les-Moulineaux (FR)**

(54) **METHOD FOR GENERATING A USER INTERFACE PRESENTING A PLURALITY OF VIDEOS**

(57)     A method for generating a user interface presenting a plurality of temporally synchronized video for a display device is disclosed. The user interface comprises a scalable number of video graphical units be to fed with videos. The method comprises obtaining a value representative of video quality from each video of the plurality of videos; and selecting videos with the highest values representative of video quality among the plurality of videos for display in each of the video units. According to other characteristics, videos are selected according to a value representative of video contributor fame or to a value representative of video similarity with videos already displayed.

The application also relates to a device, to a graphics processing unit and to computer-readable medium for implementing the method for generating a user interface in any of its variants.

FIGURE 3

**EP 3 171 600 A1**

**Description**

TECHNICAL FIELD

The present principles relate generally to the field of the presentation of videos from a plurality of videos related to the same event. More specifically, the present principles concern a method for generating a user interface presenting a plurality of synchronized videos on a display device and a device for implementing said method.

BACKGROUND

This section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

Today, with the availability of more and more digital devices, more and more video films are captured by people. Besides this explosion of video sharing in social networks, multiple users provide a potentially large number of videos of the same event. All these pieces of video content constitute a database wherein raw video material are numerous. Thus presenting these pieces of video content issued from crowd media creation is a challenge since the capacity of a user of viewing videos in a display device is limited.

A first technique for presenting videos is to create a mosaic where the display screen is split into as many units as video sources. However this technique is adapted for a limited number of videos so as to ease the presentation and the switching by a user to different video sources. This technique, inspired from thumbnail image display, does not scale when the size of the database increases since the user must dig into the huge database and the display screen is not extendible.

A second technique for presenting videos, which is usually used in video compositing interface, is to create a film strip where videos captured at a same instant are displayed. To that end, an absolute time stamp is defined, that can be the beginning of the event, and the videos are synchronized along this time stamp. The number of displayed videos in the second technique is thus reduced compared to the first technique : only the videos capturing a same scene at a same time but from different point of views are displayed. However the number of videos for a determined time stamp may vary dynamically and still may be very large.

The present principles tend to solve the issue of simultaneous synchronized videos rendering when a large number of contributions are to be processed and when real multiple point of views are to be presented to the user ensuring the best viewing experience.

SUMMARY

The present principles provide a user interface presenting a plurality of temporally synchronized videos on a display device, wherein the user interface comprises a scalable number of video units in which videos are arranged according to their quality. To that end, a method, performed by a computer, is disclosed that generates a user interface presenting a plurality of temporally synchronized videos on a display device, wherein the user interface comprises a scalable number of video units. The method comprises:

• Obtaining a value representative of video quality from each of the plurality of videos;
• selecting videos with the highest values representative of video quality among the plurality of videos for display in each of the video units.

Advantageously, a dynamic synchronized video wall based on quality rank provides best viewing experience.
According to various characteristics, either taken alone or in combination:

• video units are sorted according to their size and videos with the highest values representative of video quality are displayed in video units of largest size;
• videos are further selected according to the highest values representative of video contributor fame;
• videos are further selected according the lowest value representative of video similarity between the displayed videos;
• the selction of videos with the highest values representative of video quality in each of the video units is updated at a user selection of a new reference video to display in a first video unit, or at the end of the reference video, or at the end of any displayed video.

Advantageously, the plurality of video units comprise a first (or main) video unit and secondary video units. A reference video being a video with the highest value representative of video quality among the plurality of videos, or a video selected by a user, is displayed the first video unit and serves as reference for instance for temporal alignment of video and for content similarity. Then secondary (or auxiliary) videos according to their quality, contributor fame, similarity are displayed in secondary video units. Advantageously, thanks to one main video window and auxiliary videos (or still pictures) windows such embodiment allows easier content browsing.

According to a second aspect, a device is disclosed that comprises a processor configured to produce a video presentation user interface (UI) for a display device.

In a variant, the device comprises :

- means for generating a user interface presenting a plurality of temporally synchronized videos on a display device, wherein the user interface comprises a scalable number of video units;
- an analysis module for obtaining a value representative of video quality from each of the plurality of videos;
- means for selecting videos with the highest values representative of video quality among the plurality of videos for display in each of the video units of the user interface.

According to a specific embodiment, the device belongs to a set comprising:

- a mobile device ;
- a communication device ;
- a game device ;
- a tablet (or tablet computer) ;
- a laptop ;
- a still picture camera;
- a video camera ;
- a video server (e.g. a web server) ; and
- a video sharing platform.

According to another aspect, the present principles are directed to a graphics processing unit comprising means for executing code instructions for performing the method previously described.

According to a third aspect, a computer program product comprising program code instructions to execute the steps of the UI generating method in any of its variants when this program is executed on a computer is disclosed.

According to a fourth aspect, a processor readable medium is disclosed that has stored therein instructions for causing a processor to perform at least generating a user interface presenting a plurality of temporally synchronized videos for a display device, wherein the user interface comprises a scalable number of video units; obtaining a value representative of video quality from each of the plurality of videos; and selecting videos with the highest values representative of video quality among the plurality of videos for display in each of the video units.

According to a fifth aspect, a non-transitory program storage device is disclosed that is readable by a computer, tangibly embodies a program of instructions executable by the computer to perform a method for at least generating a user interface presenting a plurality of temporally synchronized videos for a display device, wherein the user interface comprises a scalable number of video units; obtaining a value representative of video quality from each of the plurality of videos; and selecting videos with the highest values representative of video quality among the plurality of videos for display in each of the video units.

While not explicitly described, the present embodiments may be employed in any combination or sub-combination. For example, the present embodiments are not limited to the described arrangement of videos units.

Besides, any characteristic or embodiment described for the UI generating method is compatible with a device intended to process the disclosed method and with a computer-readable storage medium storing program instructions.

BRIEF DESCRIPTION OF DRAWINGS

Preferred features of the present principles will now be described, by way of non-limiting example, with reference to the accompanying drawings, in which:

- **Figure 1** depicts a processing device for generating a user interface presenting a plurality of temporally synchronized videos according to a specific and non-limitative embodiment of the present principles;
- **Figure 2** represents an exemplary architecture of the processing device of figure 1 according to a specific and non-limitative embodiment;
- **Figure 3** represents a flowchart of a method for generating a user interface presenting a plurality of synchronized videos according to a specific and non-limitative embodiment of the present principles;
- **Figure 4** represents synchronized videos of a database D according to the present principles;
- **Figure 5** illustrates a user interface for displaying a plurality of synchronized videos according to a specific embodiment of the present principles.

DETAILED DESCRIPTION

A salient idea of the present principles is to present a subset of temporally synchronized videos in a video wall where the subset is selected according to information representative of video quality with respect to video parameters such as light, movement or saliency.

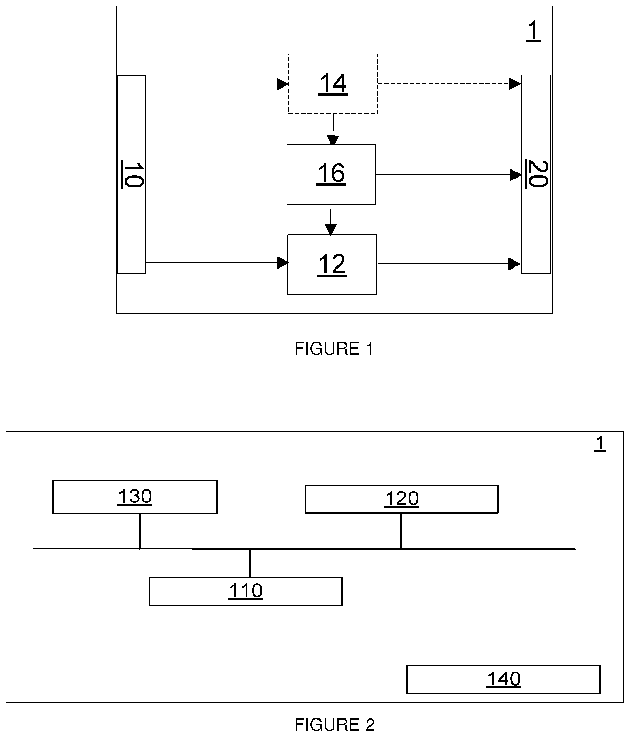

**Figure 1** depicts a processing device 1 for displaying a plurality of videos with respect to spatial and temporal connectivity according to a specific and non-limitative embodiment of the present principles. The processing device 1 comprises an input 10 configured to receive a plurality of videos from a collection of videos for instance stored in a remote database. The videos of the collection of videos may be obtained from a source. According to different embodiments of the present principles, the source belongs to a set comprising:

- a local memory, e.g. a video memory, a RAM, a flash memory, a hard disk;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface) connected to a server; and
- an picture capturing circuit (e.g. a sensor such as, for example, a CCD (or Charge-Coupled Device) or CMOS (or Complementary Metal-Oxide-Semiconductor)).

The input 10 is linked to at least one video decoder 12 configured to decode a video for display in a video unit. The input 10 is further linked to an analysis module 14 configured to obtain temporal information for each video, as well as parameters used to compute the quality information, similarity information or contributor fame. The analysis module 14 is further configured to compute from the video parameters a value representative of the quality information, similarity information, contributor fame or any of their combination as latter described. According to a variant the analysis module 14 is external to the processing device 1 and the videos parameters or the representative value is input to the processing device through the input 10. The outputs of the module 14 is connected to a module 16 configured to generate a user interface comprising a plurality of videos units and to select videos for display according to quality information of each temporally synchronized videos. The module 16 is also connected to the at least one video decoder 12 for the decoding the selected videos. The video decoders 12 and the module 16 are linked to an output 20 so as to send graphical information to a display device. In non-limiting variants, the display device is part of the device 1 or external to the device 1.

**Figure 2** represents an exemplary architecture of the processing device 1 according to a specific and non-limitative embodiment of the present principles. The processing device 1 comprises one or more processor(s) 110, which is(are), for example, a CPU, a GPU and/or a DSP (English acronym of Digital Signal Processor), along with internal memory 120 (e.g. RAM, ROM, EPROM). The processing device 1 comprises one or several Input/Output interface(s) 130 adapted to display output information and/or allow a user to enter commands and/or data (e.g. a keyboard, a mouse, a touchpad, a webcam, a display); and a power source 140 which may be external to the processing device 1. The processing device 1 may also comprise network interface(s) (not shown).

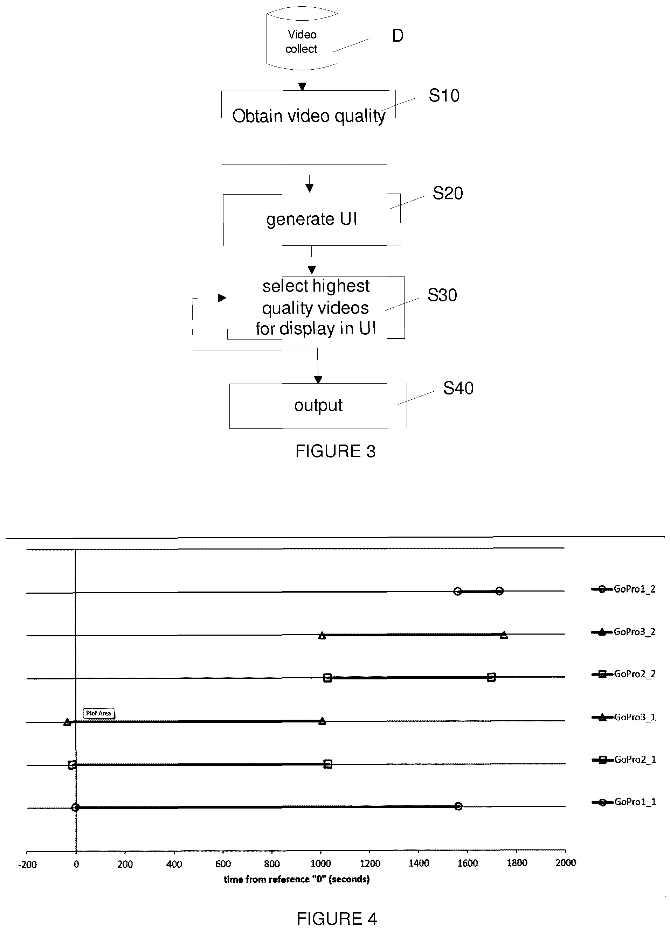

According to an exemplary and non-limitative embodiment of the present principles, the processing device 1 further comprises a computer program stored in the memory 120. The computer program comprises instructions which, when executed by the processing device 1, in particular by the processor 110, make the processing device 1 carry out the processing method described with reference to figure 3. According to a variant, the computer program is stored externally to the processing device 1 on a non-transitory digital data support, e.g. on an external storage medium such as a HDD, CD-ROM, DVD, a read-only and/or DVD drive and/or a DVD Read/Write drive, all known in the art. The processing device 1 thus comprises an interface to read the computer program. Further, the processing device 1 could access one or more Universal Serial Bus (USB)-type storage devices (e.g., "memory sticks.") through corresponding USB ports (not shown).

According to exemplary and non-limitative embodiments, the processing device 1 is a device, which belongs to a set comprising:

- a mobile device ;
- a communication device ;
- a game device ;
- a tablet (or tablet computer) ;

- a laptop ;
- a still picture camera;
- a video camera ;
- a video server (e.g. a web server) ; and
- a video sharing platform.

The skilled in the art will appreciate that the present principles as described in the preferred embodiments are advantageously computed using a Graphics processing unit (GPU) on a graphics processing board for instance with regards to the decoders or to the obtaining of video parameters.

**Figure 3** represents a flowchart of a method for generating a user interface displaying a plurality of temporally synchronized videos for a display device according to a specific and non-limitative embodiment of the present principles.

The described method is advantageously well adapted to a system or service allowing the ingest of various videos of a same event. As previously exposed, the videos are simultaneously rendered on a display to a user so as to ensure the best viewing experience even in case of a large number of videos with multiple viewpoints.

According to the present principles, videos for display are temporally synchronized. **Figure 4** represents synchronized videos of a database D according to the present principles. For instance, a first video capturing device GoPro1 captured two videos respectively represented by segments GoPro1_1 and Gopro1_2 wherein the first segment GoPro1_1 is aligned from time 0 to roughly time 1600 with respect to the time reference 0, and wherein the second segment GoPro1_2 is aligned from time 1600 to time 1700 with respect to the time reference 0. Besides, segments GoPro2_1, GoPro2_2 representing videos captured by a second device GoPro2 and segments GoPro3_1, GoPro3_2 representing videos captured by a third device GoPro3 of a same event are also temporally aligned with respect to the time reference 0. Videos synchronization information, such as the temporal alignment with respect to an absolute capture time (or time reference 0) is either input with the videos or obtained from a preliminary synchronization step not represented on figure 3. A value representative of absolute capture start time and a value representative of absolute capture end time is obtained for each video of the plurality of videos as shown on figure 4. For instance, such absolute capture times, also called time stamps, are obtained at the creation of the video in the video capturing devices GoPro1, GoPro2, GoPro3 in the case where the video capturing devices have a same internal clock (for instance aligned by a communication network). In a variant for instance disclosed in the International Patent Application WO 2014/082812, absolute capture times of a same video event are obtained by analyzing salient mel-frequency cepstmm coefficients of the audio associated with the captured video. In yet another variant, the temporal registration is based on analysis of a spatial fingerprint computed for the first frame of a video with respect to the frames of a reference video. Advantageously, any of the above variants are combined to obtain an accurate temporal synchronisation. In a variant of the representation of videos by segments as illustrated on figure 4, each videos GoPro1_1, Gopro1_2, GoPro2_1, GoPro2_2, GoPro3_1, GoPro3_2 are stored in a table with their absolute capture times, or time stamps and any other information such as source for instance. An entry of the table is for instance :

GoPro1_1    GoPro1    Start_TS = 0    Stop_TS = 1600

In yet another variant, a video is divided into temporally aligned chunk of equal time length and a timestamp (for instance 0, 200, 400) is obtained for each segment representing the video. In the following, any subdivision of a video is treated as a video. For instance, considering chunk of time length 200, video GoPro1_1 is divided into :

GoPro1_1_1    GoPro1    Start_TS=0    Stop_TS = 200
GoPro1_1_2    GoPro1    Start_TS = 200    Stop_TS = 400
GoPro1_1_3    GoPro1    Start_TS = 400    Stop_TS = 600
...
GoPro1_1_8    GoPro1    Start_TS = 1400    Stop_TS = 1600
GoPro1_2    GoPro1    Start_TS = 1600    Stop_TS = 1800

In a first step S10, a value representative of video quality is obtained from each video of the plurality of videos. To that end, each video of the database D is processed to extract a plurality of video parameters. According to an exemplary and non-limitative embodiments, parameters belong to a set comprising :

• light;
• stabilization;
• movement or action where extraction of movement metrics are described by Viola, Jones & Snow in "Detecting pedestrians using patterns of motion and appearance" (International Journal of Computer Vision 2005, pp. 153-161) or by Cedras, C., & Shah, M. in "Motion-based recognition a survey" (Image and Vision Computing 2005, pp. 129-155);

- saliency as described by Cerf, Harel, Einhäuser & Koch in "Predicting human gaze using low-level saliency combined with face detection" (Advances in neural information processing systems 2008, pp. 241-248) or by Judd, Ehinger, Durand & Torralba in "Learning to predict where humans look" (IEEE 12th international conference on Computer Vision, 2009, pp. 2106-2113);
- blur, wherein blur measure is for instance disclosed by Fang, Shen, Guo, Jacquemin, Zhou & Huang in "A consistent pixel-wise blur measure for partially blurredimages" (IEEE International Conference on Image Processing 2014, pp. 496-500);
- contrast, where contrast measure is for instance disclosed by Arici, Dikbas & Altunbasak in "A histogram modification framework and its application for image contrast enhancement" (IEEE Transactions on Image processing 2009 vol18, pp1921-1935);
- presence of semantic object such as faces wherein such information is automatically or user defined;
- spatial resolution;
- color volume, where color gamut mapping is for example described by Stone, Cowan & Beatty in "Color gamut mapping and the printing of digital color images" (ACM Transactions on Graphics 1988 vol 7, pp 249-292);
- colorfulness as described by Hasler, D., & Suesstrunk, S. E. in "Measuring colorfulness in natural images" (Electronic Imaging 2003, pp. 87-95).

According to the different parameters, parameters values are obtained for a frame of the video (such as blur) or globally for the video sequence (such as movement or spatial resolution that is set for a capture). Thus in non-limiting example, parameters are determined either for a video, or each frame of a video, or at regular frame interval of a video, or a frame (being the first frame or a key frame) representative of a video. In other examples, for a given parameter, such as salience, a set of values is defined at regular time interval for the whole video. Advantageously, a global value for the given video parameter is then obtained for instance using the mean value of each values along the time length of the video. In others words, a value is obtained on the fly each N frames and values are integrated for the P frames of the whole video by computing the average parameter value for P/N frames.

The detailed operation of such parameters extraction as disclosed in the non-limiting above examples is out of scope of the present principles. Besides, the skilled in the art will appreciate that such parameters value might be pre-processed off-line and stored in the database D along with the video and the temporal information.

According to a particularly advantageous characteristic, a value representative of video quality is a weighed mean value integrating the values of several video parameters. As the value of the different parameters, video quality value is defined for the whole video (or for each temporal chunk of a video). According to a variant, the weighting of the different video parameters to create the video quality value is defined as system value. In another variant, the weighting is defined by the user through preference settings. In a preferred variant, the higher the quality value is, the higher is the quality of the video with respect to the defined parameters and weights.

According to another particular characteristic, a value representative of video contributor fame is obtained for each video of the plurality of videos. An alternative or complementary information attached to the videos can be the name of the contributor and its fames. Saying that his fame is a system information recovered thanks to service users feedbacks or social networks data. In that case the best videos are considered as the ones uploaded by the most famous contributor. In another variant, the fame is defined locally by the user: each time the user selects a video as the reference, the contributor local fame value is incremented. In a preferred variant, the higher the contributor fame value is, the most likely the videos are selected for display.

According to another particular characteristic, a value representative of video similarity is obtained from two videos of the plurality of videos. The goal here is to avoid having a wall composed of videos that have too similar viewpoints, since the user may want to exploit the richness of various viewpoints described hereafter. Advantageously, a video similarity value is obtained by determining the geometric transformation between a frame of a first video and the corresponding frame of a second video wherein the 2 corresponding frames are temporally aligned with respect to a time reference. The skilled in the art knows, that a geometric transformation is classically determined by extracting points of interest in both frames, computing an image descriptor such as SIFT (as described by Lowe, D. G. in "Distinctive image features from scale-invariant keypoints" in International journal of computer vision 2004, vol 60, pp 91-110) and estimating a geometric homography between frames through a Ransac regression. An homography is usually represented by a 3 x 3 matrix. The matrix H representing the transformation between a frame $X_i$ of a video i and frame Xj of a video j is noted $H_{ij}$. A point $X_i$ of frame $X_i$ corresponding to a point $X_j$ of frame Xj is represented by the following equation $x_i = H_{ij} \times x_j$. Then, in case were an homography is estimated, a value of the similarity metric is defined for instance as the inverse of frobenius norm of the transformation matrix. However the present principles are compatible with any other norm applied to the matrix. The idea is that the larger the transformation, the lower the similarity value. In the case where, the frame are so distinct that an homography cannot be estimated, similarity value is set to zero. According to a particular variant, a transformation matrix is obtained for frames of the first and second videos at regular interval and a similarity value is obtained by integrating (as for quality parameters) the similarity values for the whole video.

In the following, this metric will be referred to as the geometric similarity metric or similarity metric. This metric is actually stored in a similarity table. For instance, a similarity table have video GoPro1_1, GoPro1_2, GoPro2_1, GoPro2_2, GoPro3_1, GoPro3_2 in column and row, the similarity value for the pair GoPro1_2, GoPro1_1 which are temporally synchronous is stored in the table at (GoPro1_2, GoPro1_1). Advantageously, the similarity value of videos not aligned or for a same video is set to 0. In a variant, the similarity value of videos not aligned or for a same video is set to a negative value (for instance -1).

|          | GoPro1_1     | GoPro1_2     | GoPro2_1     | GoPro2_2     | GoPro3_1 | GoPro3_2 |
|----------|--------------|--------------|--------------|--------------|----------|----------|
| GoPro1_1 | 0            |              |              |              |          |          |
| GoPro1_2 | 0            | 0            |              |              |          |          |
| GoPro2_1 | $H_{21-11}$  | 0            | 0            |              |          |          |
| GoPro2_2 | $H_{22-11}$  | $H_{22-12}$  | 0            | 0            |          |          |
| GoPro3_1 | $H_{31-11}$  | 0            | $H_{31-21}$  | 0            | 0        |          |
| GoPro3_2 | $H_{32-11}$  | $H_{32-12}$  | 0            | $H_{32-22}$  | 0        | 0        |

Where $H_{wx-yz}$ represents the similarity value between considered videos. Since $H_{21-11} = H_{11-21}$, ie the similarity is commutative, advantageously half of the table is filled as shown above.

Advantageously, videos are pre-processed to obtain the described values (quality, similarity, contributor fame) and the values are stored with the videos in the database D.

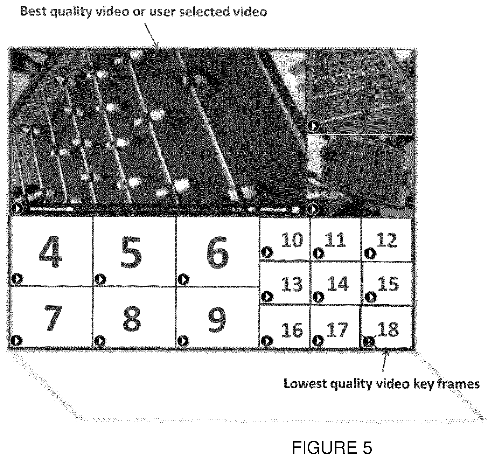

In a second step S20, a user interface is generated. The user interface is designed for presenting a plurality of videos on a display device. The user interface comprises a scalable number of video units as presented on figure 5. Such user interface is called the wall of display or video wall.

The number, size, aspect ratio and position of the video units is defined according to rendering device capabilities to ensure maximal viewing experience on the display device. According to a preferred characteristic, the video wall rendering is made of one main unit 1 and a series of smaller video units 2-18 as illustrated on figure 5. The video units are numbered according to their size and position in an increasing order starting from number 1 which is the most attractive unit up to N, N being an integer representing the number of video units, i.e. N= 18 as represented on figure 5. According to a first characteristic, the most attractive video graphical unit is the video graphical units of largest size, thus videos units are sorted according to their size and numbered according to their decreasing size. In another characteristic, the graphical unit are numbered according to the naturel order of reading of the user, thus one graphical unit on top and the left of the user interface is will be given a lower number (thus displaying a video of higher quality) as naturally most attractive to a user as shown for units numbered 4 to 9.

In a variant, the video units of the wall are all feed with videos. In another variant, video units with lower numbers (1 to 17 on figure 5) are feed with videos while the last ones corresponding to units with higher numbers (18 on figure 5) only displays still pictures, that are for instance key frames representative of the video or the first frame of the video. Advantageously such variant reduces the processing power and the number of decoders needed for presenting the user interface. In yet another variant, the last video unit displays a series of key frames extracted from all the not displayed synchronized videos. This video unit is refreshed continuously at a frequency defined by the system or by the user through a preference setting.

In a third step S30, the videos with the highest quality values among the plurality of videos are selected for display in each of the video units. The quality values at a given time stamp with respect to the reference time are ordered in decreasing order.

In a variant where quality and contributor fame metrics are combined, the selection is performed by choosing, among the set of available videos at a given time stamp, videos with the highest values representative of video quality and with the highest values representative of video contributor fame. A weighted linear combination is computed from the values representative of video quality and the values representative of video contributor fame. For instance, for a VideoCurrent$_i$ among the videos GoPro1_1, GoPro1_2, GoPro2_1, GoPro2_2, GoPro3_1, GoPro3_2

$$Score_i = QualityMetric(\text{VideoCurrent}_i) + \alpha\, FameMetric(\text{VideoCurrent}_i)$$

Where $\alpha$ is a weight defined by the system or by the user through preference settings interface, this weight explicitly controls the importance of the contributor with respect to the quality in the final composition of the wall. In a variant, it is advantageous to consider persistency of a contributor inside a same video unit in order to allow to follow the same contributor uploads more easily. Thus, for instance GoPro1_1, GoPro1_2 captured by the same device (here associated to a contributor) should be presented in a same video unit for instance video unit 1.

In another variant where quality and similarity metrics are combined, the selection is performed by choosing, among the set of available videos at a given time stamp, the highest quality videos that are not too similar so as to select a different point of view of a same scene, since videos are temporally synchronized. A weighted linear combination of these two factors can be used to make a decision, with the following iterative process:

a) The highest quality video is first selected, denoted as VideoCurrento
b) Until the number N of videos have been selected for each of N video units, perform iteratively for the i iteration :

For each remaining video named VideoCurrent$_i$, a score is computed that is defined as :

$$Score_i = QualityMetric(\text{VideoCurrent}_i)$$
$$-\beta \sum_{k=0}^{k=i-1} \big(GeometricSimilarity(\text{VideoCurrent}_k, \text{VideoCurrent}_i)\big)$$

Where $\beta$ is a weight defined by the system or by the user through preference settings interface, this weight explicitly controls the importance of the similarity criteria with respect to the quality criteria that the system/user expects in the final composition of the wall. In other words, a penalty is applied to the quality metric of a video if the view point is to similar to a video already displayed.
Then the video VideoCurrent$_i$ is selected for display where the video VideoCurrent$_i$ has the highest score among the videos that are not yet selected for display.

Of course, this mechanism applies when other metrics combination is considered for instance with contributor fame. Another weight is defined that controls the contributor fame in a score combining intrinsic quality metric, fame metric and possibly similarity metric.

Once the video to display are selected in S30, in an optional rendering step (not shown) the Technicolor video reframing technology is applied in order to automatically adapt the video and crop to the size and aspect ratio of the video wall.

Besides, the step S30 is iterated for a dynamic rendering of the video wall.

According to a first variant, the rendering is updated each time the reference video changes. Indeed, the reference video displayed in the main video unit 1 does not change until it ends or until the user selects one video inside the wall as described above. When the reference video changes, the whole video selection process of step 30 is iterated, a new distribution of videos, including the reference video, to display is defined and presented through the user interface. Besides, in the variant with chunks of fixed duration, the rendering is updated each time a new chunk GoPro1_1_1 of the reference video GoPro1_1 is reached. The reference video segment frequency controls the secondary units update since the metrics of the synchronized secondary videos may vary thus producing a new video distribution to display. Advantageously, as previously described, one can consider persistency of contributors inside the same video unit in order to enhance the monitoring of video uploads of a same contributor. When the last video unit displays a sequence of still key frames, the unit is refreshed continuously at a frequency defined by the system, typically the segment length, or by the user through a preference parameter.

According to a second variant of the dynamic rendering, the rendering is updated each time the secondary video ends. When one secondary video ends, the whole distribution is updated except for the reference video. Again, the persistency of a contributor inside a same video unit constitutes an interesting variant resulting in a possible update only of the unit where the secondary video has ended.

According to a third variant of the dynamic rendering, the user interface is configured so that a user is able to select a reference video among the secondary videos. The rendering is then updated each time a user changes the reference video.

In a fourth step S40, the generated user interface and the selected videos are output or send to a display device for rendering to u user.

**Figure 5** represents a user interface for displaying multiple videos based on video quality metric according to a specific embodiment of the present principles. Figure 5 shows 18 video units numbered from 1 to 18. Each video unit is adapted to display a video. With respect to the videos represented in figure 2, 3 different views of a same scene captured by the video devices GoPro1, GoPro2, GoPro3 are presented in video unit numbered 1, 2 and 3. Advantageously, the 3 videos presented are GoPro1_1, GoPro2_1, GoPro3_1. Naturally, the present principles are well adapted to large video database and the described example comprising 3 devices and 6 videos is given in an illustrative purpose and is in anyway limiting.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method, performed by a computer, for generating a user interface presenting a plurality of temporally synchronized videos on a display device, wherein said user interface comprises a scalable number of video units, said method being **characterized in that** it comprises:

   • Obtaining (S10) a value representative of video quality from each video of said plurality of videos;
   • Selecting (S30) videos with the highest values representative of video quality among said plurality of videos for display in each of said video units
   • Generating said user interface (S20, S40) presenting the selected videos in each of said video units for output to said display device.

2. The method according to claim 1, wherein video units are sorted according to their size and wherein videos with the highest values representative of video quality are displayed in video units of largest size.

3. The method according to any of claims 1 to 2, further comprising :

    • obtaining a value representative of video contributor fame from each video of said plurality of videos;
    • selecting videos with the highest values representative of video quality and with the highest values representative of video contributor fame among said plurality of videos for display in each of said video units.

4. The method according to any of claims 1 to 3, further comprising :

    • obtaining a value representative of video similarity between a pair of videos among said plurality of videos;
    • selecting videos with the highest values representative of video quality and with the lowest values representative of video similarity between pair of displayed videos for display in each of said video units.

5. The method according to any of claims 1 to 4, wherein said selecting of videos with the highest values representative of video quality for display in each of said video units is updated according a user selection of a reference video to display in a first video unit.

6. The method according to any of claims 1 to 5, wherein said selecting of videos with the highest values representative of video quality for display in each of said video units is updated at the end of a reference video displayed in a first video unit.

7. The method according to any of claims 1 to 6, wherein said selecting of videos with the highest values representative of video quality for display in each of said video units is updated according at the end of a displayed video.

8. A device (1) for generating a user interface presenting a plurality of temporally synchronized videos on a display device, wherein said user interface comprises a scalable number of video units, said device comprising a processor (110) configured to :

    • obtain a value representative of video quality from each video of said plurality of videos;
    • select videos with the highest values representative of video quality among said plurality of videos for display in each of said video units
    • Generate said user interface presenting the selected videos in each of said video units for said display device.

9. A device (1) for generating a user interface presenting a plurality of temporally synchronized videos on a display device, wherein said user interface comprises a scalable number of video units, said device comprising :

    • means for generating a user interface (16) presenting a plurality of temporally synchronized videos on a display device, wherein the user interface comprises a scalable number of video units;
    • an analysis module (14) for obtaining a value representative of video quality from each of the plurality of videos;
    • means for selecting (16) videos with the highest values representative of video quality among the plurality of videos for display in each of the video units of the user interface.

10. A graphics processing unit comprising means for executing code instructions for performing the method of generating a user interface presenting a plurality of temporally synchronized videos on a display device, wherein said user interface comprises a scalable number of video units, of obtaining a value representative of video quality from each video of said plurality of videos; and selecting videos with the highest values representative of video quality among said plurality of videos for display in each of said video units.

11. A computer program product comprising program code instructions to execute the steps of generating a user interface presenting a plurality of temporally synchronized videos on a display device, wherein said user interface comprises a scalable number of video units, of obtaining a value representative of video quality from each video of said plurality of videos; selecting videos with the highest values representative of video quality among said plurality of videos for display in each of said video units.

12. A processor readable medium is disclosed that has stored therein instructions for causing a processor to perform at least generating a user interface presenting a plurality of temporally synchronized videos for a display device, wherein the user interface comprises a scalable number of video units; obtaining a value representative of video quality from each of the plurality of videos; and selecting videos with the highest values representative of video quality among the plurality of videos for display in each of the video units

FIGURE 1

FIGURE 2

FIGURE 3

FIGURE 4

FIGURE 5

Europäisches
Patentamt

European
Patent Office

Office européen
des brevets

## EUROPEAN SEARCH REPORT

Application Number

EP 16 19 7871

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/192242 A1 (KELLERER WOLFGANG [DE] ET AL) 26 July 2012 (2012-07-26) * [0004]-[0007], [0015]-[0021], [0029], [0043]-[0045], [0048]-[0055], [0062]-[0066], [0071], [0074], [0075], [0077], [0082]-[0084], [0086] * * figure 1 * | 1-12 | INV. H04N21/218 H04N21/431 |
| X | EP 2 040 467 A1 (ALTICAST CORP [KR]) 25 March 2009 (2009-03-25) * [0002], [0019]-[0021], [0055]-[0057], [0061]-[0068], [0075], [0077], [0083]-[0088], [0107]-[0111], [0115], [0125]-[0127] * * figures 4,5,9 * | 1-12 | |

TECHNICAL FIELDS
SEARCHED      (IPC)

H04N

The present search report has been drawn up for all claims

| Place of search | Date of completion of the search | Examiner |
|---|---|---|
| The Hague | 13 March 2017 | La, Valérie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................................
& : member of the same patent family, corresponding
document

EPO FORM 1503 03.82 (P04C01)

**EP 3 171 600 A1**

## ANNEX TO THE EUROPEAN SEARCH REPORT
## ON EUROPEAN PATENT APPLICATION NO.

EP 16 19 7871

This annex lists the patent family members relating to the patent documents cited in  the above-mentioned European search report.
The members are as contained in the European Patent Office EDP file on
The European Patent Office is in no way liable for these particulars which are merely given for the purpose of information.

13-03-2017

| Patent document cited in search report | | Publication date | Patent family member(s) | | Publication date |
|---|---|---|---|---|---|
| US 2012192242 | A1 | 26-07-2012 | EP | 2479684 A1 | 25-07-2012 |
| | | | JP | 5408749 B2 | 05-02-2014 |
| | | | JP | 2012165371 A | 30-08-2012 |
| | | | US | 2012192242 A1 | 26-07-2012 |
| EP 2040467 | A1 | 25-03-2009 | EP | 2040467 A1 | 25-03-2009 |
| | | | KR | 20090030696 A | 25-03-2009 |
| | | | TW | 200922326 A | 16-05-2009 |
| | | | US | 2009083798 A1 | 26-03-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014082812 A

### Non-patent literature cited in the description

- **VIOLA ; JONES ; SNOW.** Detecting pedestrians using patterns of motion and appearance. *International Journal of Computer Vision,* 2005, 153-161
- **CEDRAS, C. ; SHAH, M.** Motion-based recognition a survey. *Image and Vision Computing,* 2005, 129-155
- **CERF ; HAREL ; EINHÄUSER ; KOCH.** Predicting human gaze using low-level saliency combined with face detection. *Advances in neural information processing systems,* 2008, 241-248
- **JUDD ; EHINGER ; DURAND ; TORRALBA.** Learning to predict where humans look. *IEEE 12th international conference on Computer Vision,* 2009, 2106-2113
- A consistent pixel-wise blur measure for partially blurredimages. **FANG ; SHEN ; GUO ; JACQUEMIN ; ZHOU ; HUANG.** IEEE International Conference on Image Processing. 2014, 496-500
- **ARICI ; DIKBAS ; ALTUNBASAK.** A histogram modification framework and its application for image contrast enhancement. *IEEE Transactions on Image processing,* 2009, vol. 18, 1921-1935
- **STONE ; COWAN ; BEATTY.** Color gamut mapping and the printing of digital color images. *ACM Transactions on Graphics,* 1988, vol. 7, 249-292
- Measuring colorfulness in natural images. **HASLER, D. ; SUESSTRUNK, S. E.** Electronic Imaging. 2003, 87-95
- **LOWE, D. G.** Distinctive image features from scale-invariant keypoints. *International journal of computer vision,* 2004, vol. 60, 91-110